# EUROPÄISCHE PATENTSCHRIFT

(11) **EP 3 545 734 B1**
(45) Veröffentlichungstag und Bekanntmachung des Hinweises auf die Patenterteilung: **11.08.2021**
(21) Anmeldenummer: 19163217.3
(22) Anmeldetag: 15.03.2019
(51) Int. Cl.: A01B 13/16, A01B 49/06, A01C 9/00

(54) **VORRICHTUNG ZUR HERSTELLUNG VON QUERDÄMMEN**
DEVICE FOR FORMING TRANSVERSE DAMS
DISPOSITIF POUR FORMER DES BARRAGES TRANSVERSAUX

(30) Priorität: 16.03.2018 DE 102018106147
(43) Veröffentlichungstag der Anmeldung: 02.10.2019
(73) Patentinhaber: Grimme Landmaschinenfabrik GmbH & Co. KG, 49401 Damme (DE)
(72) Erfinder: PLAGEMANN, Tobias, 48477 Hörstel (DE); LANGE gen. DETERT, Ansgar, 49324 Melle (DE)
(74) Vertreter: Wischmeyer, André

(56) Entgegenhaltungen:
- EP-A1- 2 449 870
- EP-A1- 2 462 794
- EP-A1- 2 783 558
- ES-U- 1 036 589
- RU-C2- 2 646 636
- US-A1- 2012 073 842
- US-A1- 2015 101 517

## Beschreibung

Die Erfindung betrifft eine Vorrichtung zur Herstellung von Querdämmen in Dammkulturen, insbesondere in Kartoffelkulturen. Die Vorrichtung weist mindestens zwei Häufeleinheiten auf, welche ein als Hydraulikzylinder ausgebildetes Stellmittel und zumindest ein Häufelelement haben. Im Betrieb der Vorrichtung wechselt das Häufelelement alternierend zwischen einer Häufelstellung zur Anhäufung von Erde und einer zweiten Stellung zur Positionierung der angehäuften Erde zwischen zwei Dämmen.

Derartige Vorrichtungen werden eingesetzt, um Bodenerosion in den Dammkulturen zu vermeiden. Die Dammkulturen bestehen in der Regel aus einer Mehrzahl an sich parallel zueinander erstreckenden Dämmen, in welche Hackfrüchte wie Kartoffeln eingepflanzt sind. Zwischen benachbarten Dämmen befindet sich jeweils eine sich parallel dazu erstreckende Furche, welche durch die Verlagerung von Erde zur Erzeugung der Dämme entstanden ist. In einer solchen Furche sammelt sich bei Regen ein Großteil des Wassers, wodurch das Risiko von dessen Abfließen längs der Furche besteht, wodurch wiederum ein Teil des die angrenzenden Dämme ausbildenden Erdbodens weggeschwemmt, d.h. verlagert wird. Um eine solche Verlagerung, welche das Wachstum der angrenzenden Kartoffelpflanzen gefährdet, zu vermeiden, werden durch die Vorrichtung während des Betriebes in der Furche Querdämme angehäuft, welche zwei benachbarte Dämme verbinden und eine Oberfläche haben, die oberhalb des Furchengrundes liegt. Diese Querdämme entfalten als Barriere für in der Furche angesammeltes Wasser Wirkung.

Die Vorrichtung ist während des Betriebes in der Regel an eine Zugmaschine oder eine weitere Maschine, etwa eine Kartoffellegemaschine, gekoppelt. Sie kann auch Teil einer selbstfahrenden Landwirtschaftlichen Maschine sein. Die Vorrichtung hat eine Anzahl von Häufeleinheiten, welche der Anzahl an gleichzeitig zu bearbeitenden Furchen entspricht. Während die Vorrichtung im Betrieb in Richtung der Längserstreckung der Dämme fortbewegt wird, wechselt das Häufelelement einer jeden Häufeleinheit wiederholt zwischen der Häufelstellung und der zweiten Stellung. In der Häufelstellung ist es dabei im Kontakt mit dem Erdboden im Bereich der zu bearbeitenden Furche und verlagert einen Teil des Erdbodens in Bewegungsrichtung der Vorrichtung. In der zweiten Stellung wird bzw. ist diese zuvor verlagerte Erde vom Häufelelement gelöst und somit als Erdansammlung in der Furche positioniert, wodurch ein Querdamm ausgebildet wird bzw. ist. Die Bewegung der Häufelelemente wird durch das damit verbundene Stellmittel eingeleitet.

Die Vorrichtung gemäß EP 3 011 812 A1 zeigt eine solche Vorrichtung mit einem zentralen Antrieb der Häufeleinheiten in Form von einer Kurbelwelle. Die Häufelelemente sind dabei über die Stellmittel mit der Kurbelwelle gekoppelt, wobei die Häufelelemente schwenkbeweglich gelagert sind. Eine Rotation der Kurbelwelle wird durch einen Hydraulikmotor ausgelöst und bewirkt die Bewegung aller Häufelelemente. Nachteilig an der bekannten Vorrichtung ist, dass dadurch die zu erzeugenden Querdämme nur unzureichend an vorliegenden Umgebungs- bzw. Bodenbedingungen angepasst werden können. Die Dokumente EP 2 783 558 A1 und ES 1 036 589 U beschreiben bekannte Vorrichtungen zur Herstellung von Querdämmen.

Aufgabe der vorliegenden Erfindung ist es, sowohl eine Vorrichtung als auch ein Verfahren zur Herstellung von Querdämmen bereitzustellen, welches bedarfsgerechter anwendbar ist.

Gelöst wird die Aufgabe durch eine Vorrichtung gemäß dem Gegenstand des Anspruchs 1, bei der die Steuereinheit zur voneinander unabhängigen Ansteuerung unterschiedlicher Häufeleinheiten ausgebildet ist und zumindest ein erstes vorzugsweise elektrisch zu betätigendes Ventil aufweist. Weiterbildungen der Erfindungen sind den Unteransprüchen sowie der nachfolgenden Beschreibung zu entnehmen.

Durch die erfindungsgemäße Ausbildung der Vorrichtung ist es mittels der Steuereinheit ermöglicht, dass einzelne Häufeleinheiten abschaltbar sind, d. h. deren Häufelelemente nicht alternierend zwischen der Häufelstellung und der zweiten Stellung wechseln, während andere Häufeleinheiten eingeschaltet bleiben, d. h. deren Häufelelemente zur Querdammherstellung insbesondere zyklisch bewegt sind. Diese Funktion ermöglicht es, die Häufeleinheiten selektiv zu betreiben und im Einzelnen einzelne Furchen frei von Querdämmen zu belassen. Insbesondere ist eine doppelte Bearbeitung derselben Furche vermeidbar, ohne andere Furchen nicht zu bearbeiten, wenn etwa die Breite des zu bearbeitenden Ackers kein Vielfaches der Bearbeitungsbreite der Vorrichtung ist. Das erste Ventil erlaubt ein besonders schnelles Ein-/Ausschalten zumindest einer der Häufeleinheiten im Betrieb, insbesondere wird der Aufwand zur Änderung des Betriebszustandes der zumindest einen Häufeleinheit verringert. Somit kann der Betriebsumfang der Vorrichtung verbessert auf den momentanen Bedarf abgestimmt werden.

Die Steuereinheit kann im Einzelnen auf unterschiedliche Weise ausgebildet sein. Die vorzugsweise einzige Steuereinheit der Vorrichtung steuert dabei insbesondere alle Häufeleinheiten einzeln an. Die Signalübertragung zwischen der Steuereinheit und den Häufeleinheiten findet dabei vorzugsweise elektrisch oder alternativ drahtlos oder über Fluidleitungen statt. Die Steuereinheit weist insbesondere einen Prozessor sowie vorzugsweise einen Arbeits- und einen Datenspeicher auf, wodurch Programme zur Ansteuerung der Häufeleinheiten abgerufen werden können. Mit Vorteil ist der Steuereinheit eine Bedieneinheit zugeordnet, wodurch ein Nutzer den Betrieb der Vorrichtung und die Ansteuerung der Häufeleinheiten beeinflussen kann, Funktionen ein- und ausschalten und etwaige Einstellungen vornehmen kann.

Durch die unabhängige Ansteuerung der Häufeleinheiten durch due Steuereinheit ermöglicht diese insbesondere, einzelne Häufeleinheiten im Betrieb der Vorrichtung zyklisch abzuschalten. Durch zyklisches Abschalten einzelner Häufeleinheiten während einzelner Betriebsphasen oder des Betriebes auf einzelnen Bearbeitungsbahnen sind einzelne Furchen so automatisch frei von Querdämmen zu belassen, während die benachbarten Furchen Querdämme erhalten. Die Bearbeitungsbahnen sind dabei Teilstücke der Dammkultur, die in der Regel in einer ununterbrochenen Bearbeitungsphase bearbeitet werden und sich mit einer Breite erstrecken, die der Bearbeitungsbreite der Vorrichtung entspricht. Fehlende Querdämme sind insbesondere in sogenannten "Fahrgassen" beabsichtigt, durch die zu einem späteren Zeitpunkt mit Maschinen wie Feldspritzen zu Behandlung der Kultur gefahren wird.

Eine Abschaltung einzelner Häufeleinheiten ist daneben insbesondere bei Dämmen nützlich, welche nicht auf einer gedachten, rechtwinklig zur Haupterstreckungsrichtung der Dämme angeordneten Linie enden, wobei die Haupterstreckungsrichtung der Fortbewegungsrichtung der Vorrichtung entspricht. So ist es ermöglicht, eine jede Furche über ihre komplette Länge mit Querdämmen zu versehen, ohne eine andere Furche doppelt zu bearbeiten, was zu einer unnötigen Schwächung der an die Furche angrenzenden Dämme führte.

Das zumindest eine Häufelelement der jeweiligen Häufeleinheit ist bevorzugt als Schar ausgebildet, wobei es in der Häufelstellung unmittelbaren Kontakt zum Erdboden hat und Erde bei Fortbewegung der Vorrichtung in Fahrtrichtung entlang der Dämme durch die von ihm zu bearbeitende Furche und vor sich her schiebt. In der zweiten Stellung des Häufelelementes löst sich im Betrieb die zuvor geschobene Erde vom Häufelelement und hat dieses besonders bevorzugt keinen Kontakt zur Erde. Insbesondere ist es in der weiteren Stellung relativ zum Rest der Vorrichtung höher gelegen als in der Häufelstellung. Dazu ist das Häufelelement vorzugsweise an einer um eine horizontale Schwenkachse schwenkbare Häufelschwinge angeordnet oder zumindest anteilig in vertikaler Richtung verschieblich. Das als Hydraulikzylinder ausgebildete Stellmittel ist bevorzugt stufenlos verlänger- und verkürzbar.

Vorzugsweise ist die Steuereinheit zur variablen Einstellung des Bewegungsablaufes des Häufelelementes zumindest einer Häufeleinheit im Betrieb der Vorrichtung ausgebildet. Insbesondere ist die Steuereinheit zur variablen Einstellung der Dauer des Verbleibens des Häufelelementes in der Häufelstellung und/oder der Eindringtiefe des Häufelelementes in der Häufelstellung in den Boden ausgebildet. Die Menge der durch das Häufelelement geschobenen Erde und damit insbesondere die Höhe des erzeugten Querdamms steigen dabei mit der der Dauer und der Eindringtiefe. Die Eindringtiefe ist der Abstand in vertikaler Richtung eines tiefst gelegenen Abschnittes des Häufelelementes von dem Grund der davon bearbeiteten Furche in Häufelstellung.

Während des Betriebes einer Häufeleinheit beschreibt das zugehörige Häufelelement eine Bewegung, durch die es abwechselnd eine Häufelstellung und eine weitere Stellung erreicht. Dabei verweilt das Häufelelement in einer bevorzugten Ausgestaltung der Erfindung nach Erreichen einer der Stellungen für einen bestimmten Zeitraum darin, während in einer alternativen vorteilhaften Ausgestaltung der Erfindung das Häufelelement einer kontinuierlichen Bewegung unterliegt und beispielsweise entsprechend einer Sinusfunktion zwischen Häufelstellung und weiterer Stellung pendelt.

Die Parameter des Bewegungsablaufes des Häufelelementes sind bevorzugt durch die Steuereinheit vielfältig einstellbar. Neben den genannten Größen ist vorzugsweise die Dauer zwischen einem Erreichen der weiteren Stellung und dem folgenden Erreichen der weiteren Stellung einstellbar. Darüber hinaus ist bevorzugt die Geschwindigkeit des Häufelelementes zwischen Häufelstellung und weiterer Stellung variierbar. Außerdem lassen sich insbesondere die Häufelstellung und die weitere Stellung einstellen, d.h. ihre Position, insbesondere der jeweilige Schwenkwinkel der Häufelschwinge, umdefinieren. Die genannten Parameter sind vorzugsweise in einem begrenzten Bereich stufenlos variierbar oder alternativ aus einer Auswahl zuvor festgelegter Größen wählbar. Dadurch wird ermöglicht, die mit der Vorrichtung zu erzeugenden Querdämme entsprechend der vorliegenden Bedingungen wie etwa Bodenqualität und Dammgröße hinsichtlich Höhe und Aufbau optimal zu formen und an den Bedarf anzupassen. Besonders bevorzugt lassen sich die Bewegungsabläufe unterschiedlicher Häufelelemente separat einstellen.

In einer vorteilhaften Ausgestaltung der Erfindung ist die Steuereinheit zum Empfang von auf zumindest einem Neigungssensor, zumindest einem Fahrgeschwindigkeitssensor, zumindest einem Abstandssensor, zumindest einem Kartierungseinheit und/oder zumindest einem GPS-Empfänger oder dergleichen Ortungsgerät basierenden Informationen ausgebildet. Insbesondere ist die Steuereinheit zur Kopplung derer mit den genannten Sensoren ausgebildet. Vorzugsweise ist die Steuereinheit zur Verarbeitung der entsprechenden Signale derart ausgebildet, dass die beschriebenen Parameter des Bewegungsablaufs des Häufelelements im Betrieb automatisch oder manuell neigungs-, fahrgeschwindigkeits-, abstands- und/oder ortsabhängig variiert werden können. Somit kann der Bewegungsablauf an Bedingungen betreffend den Ackerschlag oder dessen Bearbeitung angepasst werden.

Der Neigungssensor weist dabei insbesondere einen Pendelkörper oder eine Messflüssigkeit auf, dessen bzw. deren Lage bei der Neigungsmessung etwa optisch oder kapazitiv ermittelt wird. Als Geschwindigkeitssensor lassen sich insbesondere optische Umlaufzähler oder ein Ortungsgerät nutzen, dessen Signal dynamisch auszuwerten ist. Zur Ortung ist neben einem GPS- oder anderen satellitengestützten Geonavigationsempfängern beispielsweise auch ein GSM-Empfänger verwendbar. Sämtliche so erzeugte Signale lassen sich bevorzugt alternativ von der Zugmaschine, an die die Vorrichtung im Betrieb gekoppelt ist, empfangen.

Durch die Kartierungseinheit lässt sich die Vorrichtung insbesondere ortsabhängig steuern, ohne dass dafür ein beschriebener satellitengestützter Geonavigationsempfänger notwendig ist. Bevorzugt hat die Kartierungseinheit einen Prozessor sowie einen Speicher, in den Daten betreffend die Ausmaße eines Ackerschlages zu laden sind. Auf Basis dieser Daten sowie weiteren wie Fahrtgeschwindigkeit, Fahrtrichtung und/oder Anzahl der Richtungswechsel, insbesondere auf Basis einer Anzahl an Verstellungen eines Spurenreißers, ist der Bewegungsablauf einstellbar. Dabei hat die Vorrichtung oder eine damit gekoppelte Maschine insbesondere zwei Spurenreißer, die abwechselnd und insbesondere je nach Fahrtrichtung Kontakt zum Erdbodenhaben und somit eine Referenz für eine zukünftig zu fahrende Spur bilden.

Insbesondere lässt sich der Bewegungsablauf proportional zur Fahrgeschwindigkeit beschleunigen oder an lokale Bodenbedingungen anpassen, welche koordinatenbasiert vorprogrammiert sind und auf welche auf Basis des Ortungsgerätes automatisch reagiert werden kann. Auf Basis des Ortungsgerätes lässt sich insbesondere der Bewegungsablauf oder eine selektive Abschaltung von Häufeleinheiten fahrtrichtungsabhängig durch die Steuereinheit steuern.

Mit Vorteil ist/sind zumindest ein Neigungssensor, zumindest ein Fahrgeschwindigkeitssensor, zumindest ein Abstandssensor, zumindest eine Kartierungseinheit und/oder zumindest ein GPS- oder anderer satellitengestützter Geonavigationsempfänger oder dergleichen Ortungseinrichtung der Steuereinheit zugeordnet oder von der Steuereinheit umfasst. Sie sind Teil der Steuereinheit oder unmittelbar an einem weiteren Teil der Vorrichtung angeordnet. Dadurch sind die von den Sensoren aufgenommenen Daten besonders exakt und die Reaktionszeiten darauf kurz. Alternativ sind die Sensoren insbesondere Teil einer mit der Vorrichtung gekoppelten Maschine wie etwa einem Schlepper oder einer Kartoffellegemaschine. In diesem Fall lassen sich die außerhalb der Vorrichtung gewonnenen Daten zur Steuereinheit übertragen und von ihr zugunsten einer Anpassung des Betriebes der Häufeleinheiten beispielsweise in einer Kurvenfahrt verwerten.

Besonders bevorzugt ist der Neigungssensor zur Messung einer Neigung einer Längsachse oder einer Querachse der Vorrichtung relativ zu einer Lotrechten ausgebildet. Die Lotrechte ist dabei eine gedachte Achse, welche in Richtung der Schwerkraft verläuft. Die Längsachse der Vorrichtung verläuft, einen geradlinigen Verlauf der Kartoffeldämme vorausgesetzt, parallel zur Haupterstreckungsrichtung der Dämme. In dem Fall, in dem der Neigungssensor eine Neigung der Längsachse misst, lässt sich die Vorrichtung in Abhängigkeit von einer Steigung bzw. einem Gefälle betreiben, bei der bzw. dem die Kartoffeldämme bergauf bzw. bergab verlaufen.

Insbesondere lässt sich die Höhe bzw. die Anzahl der Querdämme pro Furchenlänge mit dem Ausmaß der gemessenen Neigung steigern, um etwa Regenwasser möglichst an dem Ort zu halten, an dem es niedergeregnet ist.

Alternativ ist der Bewegungsablauf des Häufelelementes vorzugsweise abhängig von einer Querneigung einer horizontal und orthogonal zur Längsachse verlaufenden Querachse relativ zur Lotrechten. Dabei wird neigungsabhängig bevorzugt die Form der Querdämme insofern variiert, als dass sie im an den tieferliegenden benachbarten Damm grenzenden Bereich eine größere Höhe haben als auf ihrer gegenüberliegenden Seite, um eine Barrierewirkung auf möglichst große Wassermenge entfalten zu können.

In einer vorteilhaften Ausgestaltung der Erfindung ist der zumindest eine Abstandssensor zum Messen eines Abstands zum Boden ausgebildet. Bevorzugt ist der Abstandssensor unmittelbar an der Vorrichtung angebracht und auf eine der Furchen gerichtet, in denen Querdämme anzuhäufeln sind. Alternativ werden bevorzugt Kameras, insbesondere 3D-Kameras, verwendet. Durch einen solchen Sensor, der den Abstand zum Erdboden bevorzugt anhand einer Laufzeit von Laserlicht misst, lässt sich die Oberflächenstruktur der Furche ermitteln und die Funktion des Häufelelementes darauf abstimmen. Insbesondere lassen sich in der jeweiligen Furche bereits angehäufte Querdämme erkennen und die zugeordnete Häufeleinheit lokal ausschalten.

Bevorzugt ist der Hydraulikzylinder einerseits an einem unbeweglichen Teil der Vorrichtung angeordnet und andererseits zumindest mittelbar mit dem Häufelelement verbunden. Durch den Hydraulikzylinder lässt sich das Häufelelement im Betrieb der Vorrichtung besonders exakt und in einem weiten Bereich positionieren.

Zur Steuerung der Stellung des Hydraulikzylinders weist die Steuereinheit gemäß dem Gegenstand des Anspruchs 1 zumindest ein erstes vorzugsweise elektrisch zu betätigendes Ventil auf. Insbesondere ist jedem Hydraulikzylinder ein solches erstes Ventil zugewiesen. Durch das erste Ventil ist gemäß dem Gegenstand des Anspruchs 1 ein Fluidstrom zum bzw. vom Hydraulikzylinder steuerbar, wobei es von der Steuereinheit angesteuert oder geschaltet wird. Durch die bevorzugte elektrische Betätigung des Ventils können mit dem Hydraulikzylinder besonders kurze Reaktionszeiten, gemessen vom Zeitpunkt des Empfangs von Sensordaten durch die Steuereinheit bis zur folgenden und darin begründeten Verstellung des Häufelelementes, erreicht werden.

Besonders bevorzugt hat das erste Ventil zumindest eine Zufuhrstellung, in der ein Kolbenringraum des Hydraulikzylinders mit einer Fluidzufuhr verbunden ist. In der Zufuhrstellung des ersten Ventils ist somit Fluid von einer Fluidquelle in den Kolbenringraum leitbar und dessen Volumen dadurch zu vergrößern, wodurch der Hydraulikzylinder sich verkürzt bzw. eingefahren wird. Das Fluid wird vorzugsweise von der Zugmaschine, an die die Vorrichtung gekoppelt ist, zugeführt und der durch die Zugmaschine bereitgestellte Fluiddruck somit zur Verstellung des Hydraulikzylinders genutzt. In einer alternativen bevorzugten Ausgestaltungsform der Erfindung umfasst die Vorrichtung einen separaten Fluidkreislauf mit einer eigenen Fluidzufuhr, die dann in Zufuhrstellung mit dem Kolbenringraum verbunden wird. Durch die Zufuhrstellung werden eine Verkürzung des Hydraulikzylinders und dadurch insbesondere die Überführung des Häufelelementes von der Häufelstellung in die weitere Stellung besonders zuverlässig umgesetzt.

Vorzugsweise ist das erste oder ein zweites Ventil in eine Kurzschlussstellung überführbar, in der eine fluiddurchlässige Verbindung zwischen einem Kolbenraum des Hydraulikzylinders und dem Kolbenringraum hergestellt wird. Der Kolbenraum ist dabei der Hohlraum des Hydraulikzylinders, dessen Volumen sich bei Verlängerung bzw. beim Ausfahren dessen vergrößert. Dabei geht eine Vergrößerung des Kolbenraumvolumens stets mit einer Verkleinerung des Kolbenringraumvolumens einher. Das Volumen, um das der Kolbenringraum sich beim Ausfahren des Hydraulikzylinders aus einer verkürzten Stellung verkleinert ist dabei geringer als das Volumen, um das sich der Kolbenraum währenddessen vergrößert, da die Kolbenstange den Kolbenringraum durchdringt.

Die Kurzschlussstellung, vorzugsweise des ersten Ventils, erlaubt dem Fluid eine unmittelbare Strömung von einem der beiden Räume in den jeweils anderen. Damit erlaubt die Kurzschlussstellung etwa eine rein schwerkraftinduzierte Verstellung des Häufelelementes, bei der Fluid zwischen den beiden Räumen des Hydraulikzylinders ausgetauscht wird, wozu eine Kompressibilität des genutzten Fluids oder ein zugeschalteter Fluidspeicher notwendig ist. Vorteilhafterweise ist das Fluid dabei als Öl ausgebildet.

Besonders bevorzugt schaltet das erste oder das zweite Ventil dann in die Kurzschlussstellung, wenn dem Kolbenraum zwecks einer Verlängerung des Hydraulikzylinders Fluid zugeführt werden soll. Durch die Kurzschlussstellung wird ermöglicht, dass der Kolbenraum auf sein maximales Volumen vergrößert wird, wobei nur ein Bruchteil des zur Vergrößerung nötigen Fluids von außerhalb des Hydraulikzylinders zugeführt werden muss. Bei Verbindung von Kolbenraum und Kolbenringraum, während sich der Hydraulikzylinder in einer eingefahrenen / verkürzten Stellung befindet, reicht es zur Bewirkung eines Ausfahrens des Hydraulikzylinders im Einzelnen, ein Fluidvolumen zuzuführen, welches dem Volumen der in verkürzter Stellung innenliegenden Kolbenstange entspricht. Gegenüber einer Hydraulikzylindersteuerung, bei der jeweils der zu vergrößernde Raum des Hydraulikzylinders das zuzuführende Fluid gänzlich von einer externen Fluidzufuhr erhält, ist es bei der vorliegenden Lösung die Erhöhung der Effizienz durch die Zu- und Abführung nur einer Mindestmenge an Fluid zum bzw. vom Hydraulikzylinder erreicht.

Bei der entgegengesetzten Bewegung des Hydraulikzylinders, bei der der Kolbenringraum vergrößert wird, wird entsprechend das Differenzvolumen an Fluid vom Hydraulikzylinder bzw. von den daran angeschlossenen, kurzgeschlossenen Leitungen abgeführt.

In einer vorteilhaften Ausgestaltung der Erfindung weist die Vorrichtung zumindest ein Speicherelement zur Zwischenspeicherung von Fluid auf, welches zumindest mit der Kolbenraum eines Hydraulikzylinders verbunden oder verbindbar ist. Vorzugsweise ist ein Speicherelement mit sämtlichen Hydraulikzylindern verbunden oder je ein Speicherelement mit einem Hydraulikzylinder verbunden. Das Speicherelement hat dabei insbesondere ein maximales Speichervolumen, welches der Differenz der maximalen Volumina von Kolbenraum und Kolbenringraum zumindest eines Hydraulikzylinders entspricht. Durch die Möglichkeit der Verbindung von Speicherelement bzw. dessen Innenraum mit dem Kolbenraum wird ermöglicht, die zum Ausfahren des Hydraulikzylinders bei Kurzschluss von Kolbenraum und Kolbenringraum nötige Fluidmenge bereitzustellen, ohne dass eine Fluidzufuhr von externer Seite, etwa von der Zugmaschine, nötig ist. Das Speicherelement ist dabei vorzugsweise derart ausgestaltet, dass das gespeicherte Fluid zumindest in gefülltem Zustand des Speicherelementes mit einem Druck beaufschlagt wird, der eine Verstellung des Hydraulikzylinders zuverlässig herstellt.

Gefüllt wird das Speicherelement nach Ausfahren des Hydraulikzylinders vorzugsweise dadurch, dass bei entgegengesetzter Bewegung des Hydraulikzylinders (Vergrößerung des Kolbenringraumes) das dazu nötige Fluid von einer Fluidzufuhr eingetragen wird, wodurch der Kolbenraum verkleinert und das zuvor darin befindliche Fluid verdrängt wird. Zumindest ein Teil des verdrängten Fluids wird dabei in das Speicherelement geleitet, damit durch diesen nach Abschluss der Einfahrbewegung des Hydraulikzylinders und bei einer folgenden, erneuten Ausfahrbewegung desselben erneut der Kolbenraum mit Fluid gespeist werden kann. Durch diese Ausgestaltung der Erfindung wird erreicht, dass pro Verfahrzyklus des Hydraulikzylinders, von einer Einfahrstellung (Kolbenringraum mit maximaler Größe, Hydraulikzylinder mit minimaler Länge) in eine Ausfahrstellung (Kolbenraum mit maximaler Größe, Hydraulikzylinder mit maximaler Länge) und zurück nur Fluid im Rahmen des im Betrieb vom Kolbenringraum maximal aufzunehmenden zugeführt werden muss und der Kolbenraum lediglich aus dem Kolbenringraum und aus dem Speicherelement gespeist wird. Durch dieses geringe Ausmaß der von einer Fluidzufuhr der Häufeleinheit zuzuführenden Fluidmenge wird die Effizienz der Vorrichtung maximiert und gleichzeitig eine ausreichende Kühlung der Hydraulikkomponenten sichergestellt. Insbesondere werden das Speicherelement und der Kolbenraum zur Vergrößerung dessen über ein weiteres Ventil verbunden, wodurch eine Strömung zur Abschaltung der Hydraulikeinheit verhindert sowie eine optimale Steuerung der Strömung gewährleistet werden kann.

In einer bevorzugten Ausgestaltungsform der Erfindung wird das Häufelelement durch ein Ausfahren/Verlängern des Hydraulikzylinders in die Häufelstellung überführt, wobei es dabei relativ zu einer Horizontalen abgesenkt wird. Zu dieser Überführung ist entsprechend ein geringerer Energieaufwand nötig als für die entgegengesetzte Überführung des Häufelelementes in die weitere Stellung. Während die (externe) Fluidzufuhr über den dadurch bereitgestellten Fluiddruck jedenfalls eine ausreichende Energie zur Verfügung stellt, ist diese Ausgestaltungsform insofern vorteilhaft, als dass die Herbeiführung der Häufelstellung einen geringen Energiebedarf hat und leichter auch durch den von dem Speicherelement bereitgestellten Fluiddruck zuverlässig herzustellen ist.

Vorzugsweise ist dem ersten Ventil ein Rückstellelement zur Verhinderung der Kurzschlussstellung zugeordnet. Durch das Rückstellelement wird insbesondere eine Ventilstellung herbeigeführt, in der der Hydraulikzylinder durch eine Verbindung von Kolbenringraum und Fluidzufuhr in der weiteren Stellung fixiert ist. Somit ist durch das erste Ventil eine zuverlässige Abschaltung der Häufeleinheit ermöglicht, wobei die zur elektrischen Signalübertragung zum ersten Ventil nötige Energie eingespart werden kann und eine unbeabsichtigte Häufelstellung zur zuverlässigen Vermeidung von Querdämmen vermieden wird.

Die Aufgabe wird weiterhin durch eine Kartoffellegemaschine mit zumindest einer Legeeinheit zur Positionierung von vereinzelten Kartoffeln in zu formenden Dämmen gelöst, welche die beschriebene Vorrichtung aufweist. Die Kartoffellegemaschine, eine Maschine zum Legen, d.h. pflanzen, von Kartoffeln, hat bevorzugt eine Mehrzahl von in Längsrichtung nebeneinander angeordneten Legeeinheiten, die im Betrieb jeweils vereinzelte Kartoffeln auf dem Erdboden ablegen und, bevorzugt durch Dammformbleche oder Sechscheiben, einen die abgelegten Kartoffeln einschließenden Damm formen. Durch die Nutzung der Vorrichtung als Bestandteil der Kartoffellegemaschine können Querdämme unmittelbar nach der Herstellung der Dämme erzeugt werden. Dadurch ist lediglich ein Arbeitsgang sowohl für das Legen der Kartoffeln als auch für die Erstellung der Querdämme zwischen den Kartoffeldämmen nötig und der Aufwand gegenüber zweier einzelner Arbeitsgänge verkleinert.

Bevorzugt ist der Steuereinheit zumindest ein umlaufender Geschwindigkeitsmesser zur Erfassung der Umlaufgeschwindigkeit zumindest eines Vereinzelungselementes von zumindest einer Legeeinheit zugeordnet. Jede Legeeinheit hat dabei zumindest ein Vereinzelungselement, wodurch aus einer bevorrateten Vielzahl von Kartoffeln einzelne separiert werden, um diese mit definierten Abständen einzeln auf der Erde abzulegen. Jedes Vereinzelungselement ist vorzugsweise als Becher(band) oder als Riemen eines Riemenbettes ausgebildet. Die Umlaufgeschwindigkeit dieser Vereinzelungselemente ist fahrgeschwindigkeitsabhängig regelbar. Alternativ zu einem Fahrgeschwindigkeitssensor kann die Funktion der Vorrichtung bevorzugt durch den Umlaufgeschwindigkeitsmesser unmittelbar von der Umlaufgeschwindigkeit der Vereinzelungselemente abhängig gemacht werden, was zu einer Optimierung der Anzahl der Querdämme pro Furche nutzbar ist.

Besonders bevorzugt entspricht die Zahl der Umlaufgeschwindigkeitsmesser der Zahl der Legeeinheiten der Kartoffellegemaschine. Durch das separate Messen der Umlaufgeschwindigkeit einer jeden Legeeinheit kann die Funktion der Häufeleinheiten von der Umlaufgeschwindigkeit vorzugsweise je einer oder zwei der Häufeleinheit zugeordneter Legeeinheiten abhängig gemacht werden. Im Falle von unterschiedlichen Umlaufgeschwindigkeiten von Vereinzelungselementen unterschiedlicher Legeeinheiten, wie sie etwa bei einer Kurvenfahrt zugunsten von gleichen Abständen der jeweils gelegten Kartoffeln sinnvoll ist, können entsprechend die Häufeleinheiten mit unterschiedlichen Bewegungsabläufen, insbesondere Geschwindigkeiten bzw. Frequenzen, betrieben werden. Dadurch sind auch bei Kurvenfahrten, wodurch die beim Legen der Kartoffeln erzeugten Dämme unterschiedliche tatsächliche Dammlängen haben, Querdämme mit in Fahrtrichtung zueinander gleichen Abständen herstellbar.

Weiterhin wird die Aufgabe durch ein Verfahren zur Herstellung von Querdämmen in Dammkulturen, insbesondere in Kartoffelkulturen, gelöst. Dazu wird eine Vorrichtung, insbesondere ein Querdammhäufler, umfassend zumindest zwei Häufeleinheiten mit jeweils zumindest einem Häufelelement und zumindest einem Stellmittel, insbesondere eine beschriebene Vorrichtung, verwendet. Dabei haben die Häufelelemente einen Bewegungsablauf, durch den die Häufelelemente von einer Häufelstellung zur Anhäufung von Erde in eine zweite Stellung zur Positionierung der angehäuften Erde zwischen zwei Dämmen und zurück überführt werden. Währenddessen wird die Vorrichtung parallel zur Haupterstreckungsrichtung der Dämme fortbewegt. Die Bewegungsabläufe unterschiedlicher Häufelelemente werden dabei durch eine Steuereinheit unabhängig voneinander gesteuert. Unterschiedliche Häufelelemente können dabei je nach Bedarf voneinander abweichend durch die Steuereinheit gesteuert werden, wodurch die einzelnen Häufelelemente entsprechend in Querrichtung der Vorrichtung variierender Bedingungen jeweils optimal betrieben werden können.

Vorzugsweise sind die Bewegungsabläufe, insbesondere die Dauer des Verbleibens zumindest eines Häufelelementes in der Häufelstellung und/oder die Eindringtiefe zumindest eines Häufelelementes in der Häufelstellung in den Boden, mittels der Steuereinheit variierbar. Durch die Einstellung der Dauer können die Abstände sowie die Höhen der mit dem jeweiligen Häufelelement erzeugten Querdämme besonders einfach variiert werden. Durch die Einstellung der Eindringtiefe zumindest des gleichen oder eines anderen Häufelelementes kann etwa bei gleichbleibendem Abstand der Querdämme zueinander deren Höhe insofern variiert werden, als dass die in der Häufelstellung angehäufte Erde und damit die Höhe des erzeugten Querdamms mit wachsender Eindringtiefe zunimmt.

Bevorzugt lassen sich wiederum für die einzelnen Häufelelemente der Vorrichtung die Geschwindigkeiten von deren Bewegungsabläufen, deren Beschleunigungen, deren Bewegungsfrequenz sowie deren Häufelstellung durch die Steuereinheit stufenweise oder stufenlos einstellen. Besonders bevorzugt sind sämtliche Kennzeichen der Position-Zeit-Funktion eines jeden Häufelelementes zumindest begrenzt einstellbar. Dabei sind die Bewegungsabläufe unterschiedlicher Häufelelemente insbesondere unabhängig voneinander.

In einer vorteilhaften Ausgestaltung der Erfindung ist der Bewegungsablauf automatisch in Abhängigkeit von einer durch einen Neigungssensor ermittelten Neigung der Vorrichtung relativ zu einer Lotrechten variierbar. Dadurch sind die Querdämme durch die Häufelelemente so formbar, wie sie in einer etwaigen Hanglage ihre Wirkung optimal entfalten können, wobei bei einem horizontalen Abschnitt etwa der Bewegungsablauf insofern variierbar ist, dass er aufgrund des im Horizontalen geringeren Erosionsrisikos besonders energiesparend ist.

Bevorzugt ist der Bewegungsablauf automatisch in Abhängigkeit von der Neigung einer Längsachse der Vorrichtung relativ zur Lotrechten variierbar. Insbesondere ist der Bewegungsablauf insofern variierbar, als dass mit wachsender Verschwenkung der Längsachse relativ zu einer Horizontalen zumindest die Frequenz des Erreichens der zweiten Stellung oder die Eindringtiefe des Häufelelementes in den Boden in Häufelstellung erhöht wird. Die Längsachse ist dabei bei ausbleibender Neigung horizontal angeordnet und verläuft bei geradliniger Fortbewegung der Vorrichtung in Fortbewegungsrichtung. Durch eine derartige Abhängigkeit des Bewegungsablaufes von der Neigung in Längsrichtung der Dämme kann die Anzahl und die Höhe der Querdämme erhöht werden, wodurch der in diesen Bereichen vergrößerten Erosionsgefahr und der größeren nötigen Querdammhöhe pro zu haltendem Wasser-Rechnung getragen werden kann.

Besonders bevorzugt ist der Bewegungsablauf automatisch in Abhängigkeit von einer Fahrgeschwindigkeit variierbar. Diese wird insbesondere durch einen an die Steuereinheit angeschlossenen Geschwindigkeitssensor der Vorrichtung, vorzugsweise durch ein Tastrad, ermittelt. Alternativ ist der Geschwindigkeitssensor bevorzugt Teil der Zugmaschine, welche ein Geschwindigkeitssignal an die Steuereinheit überträgt. Bevorzugt ist der Bewegungsablauf insofern abhängig von der Fahrgeschwindigkeit, als dass die Frequenz der Einstellung der weiteren Stellung bzw. der Häufelstellung proportional zur Fahrgeschwindigkeit ist, wodurch insbesondere bei ausbleibender Fortbewegung der Vorrichtung auch die Häufelelemente still stehen. Somit ist ermöglicht, dass die Querdämme, unabhängig von der Fahrgeschwindigkeit der Vorrichtung während ihrer Herstellung, einen gleichbleibenden Abstand voneinander haben.

In einer vorteilhaften Ausgestaltung der Erfindung ist der Bewegungsablauf automatisch in Abhängigkeit von einer insbesondere durch einen GPS-Empfänger oder dergleichen Ortungsgerät ermittelten Richtungsänderung, eine Kurvenradius einer gefahrenen Kurve oder einem Lenkwinkel der Vorrichtung oder einer daran gekoppelten Maschine variierbar. Insbesondere lässt sich somit erreichen, dass bei einer Kurvenfahrt das kurveninnere Häufelelement sich langsamer, d. h. mit einer geringeren Frequenz des Erreichens einer der beiden Stellungen, bewegt wird als ein kurvenäußeres Häufelelement. Dadurch wird trotz Kurvenfahrt erreicht, dass die durch die unterschiedlichen Häufelelemente erzeugten Querdämme den gleichen Abstand zu den in der gleichen Furche daran anschließenden haben.

Bevorzugt ist der Bewegungsablauf automatisch in Abhängigkeit von einem insbesondere durch zumindest einen GPS-Empfänger oder dergleichen Ortungsgerät ermittelten lokalen Aufenthaltsort der Vorrichtung oder einer daran gekoppelten Maschine variierbar. Bei einer Kartierung des zu bearbeitenden Ackerschlages lässt sich somit der Bewegungsablauf entsprechend der lokalen Bodenqualität anpassen.

Alternativ oder ergänzend kann ein Benutzer während des Betriebes der Vorrichtung bevorzugt aus unterschiedlichen Bewegungsprogrammen auswählen bzw. sich Bewegungsabläufe manuell programmieren oder mit der Vorrichtung aufgenommene Daten ortsspezifisch in der Steuereinheit speichern, um zukünftige Arbeitsgänge auf demselben Ackerschlag zu optimieren.

Besonders bevorzugt ist im Betrieb in Abhängigkeit von der insbesondere auf Basis der Daten von zumindest einem GPS-Empfänger oder dergleichen Ortungsgerät ermittelten Fahrtrichtung je eines der beiden in einer Querrichtung, parallel zur Querachse, äußersten Häufelelemente automatisch insbesondere abwechselnd abschaltbar. Die Abschaltung eines Häufelelementes meint dabei vorzugsweise die Festlegung dessen in der weiteren Stellung oder einen Bewegungsablauf, bei dem das Häufelelement keinen Kontakt zur Erde hat. Durch die fahrtrichtungsabhängige Abschaltbarkeit ist es insbesondere bei an Kartoffellegemaschinen gekoppelten Vorrichtungen vereinfacht, dass keine Furchen doppelt bearbeitet werden.

Um im konventionellen Kartoffellegeverfahren sämtliche Furchen zwischen den erzeugten Dämmen bearbeiten, d. h. darin Querdämme erzeugen zu können, ist die Anzahl der Häufelelemente in der Regel um eins größer als die Anzahl der Legeeinheiten und der damit erzeugten Dämme. Konventionellerweise wird die Legemaschine im Betrieb den Ackerschlag auf- und abgefahren, d. h. die Kartoffeln in Bahnen gelegt, wobei benachbarte Bahnen je in gegensätzlicher Fahrtrichtung gebildet sind. Um in den Furchen, im Bereich derer zwei dieser Bahnen aneinandergrenzen, eine doppelte Anzahl an Querdämmen zu vermeiden, ist durch die beschriebene Abhängigkeit vorzugsweise je das Häufelelement abschaltbar, welches an den jeweils noch nicht bearbeiteten Teil des Ackerschlages angrenzt.

Bevorzugt lässt sich zumindest eine Häufeleinheit zur Vermeidung von Querdämmen in Fahrgassen automatisch zyklisch abschalten. insbesondere lässt sie sich in Abhängigkeit von registrierten Anzahl an Richtungswechseln der Vorrichtung oder an Aushebungen der Vorrichtung oder in Abhängigkeit des durch zumindest einen GPS-Empfänger oder dergleichen Ortungsgerät ermittelten lokalen Aufenthaltsorts automatisch zyklisch abschalten, wobei mit Ausheben ein Abheben der Vorrichtung vom Erdboden durch die Zugmaschine gemeint ist. Somit können auf einzelnen Bahnen zumindest einzelne Häufelelemente gestoppt werden, wodurch die entsprechenden Furchen frei von Querdämmen bleiben. Diese Furchen lassen sich so anordnen, dass sie Fahrspuren, etwa einer Feldspritze, entsprechen. Insbesondere lassen sich für den Fall, dass eine von der der Vorrichtung abweichende Bearbeitungsbreite etwa der Feldspritze kein Vielfaches von der Bearbeitungsbreite der Vorrichtung ist, sämtliche Häufeleinheiten auf diesen Weise abschalten.

Besonders bevorzugt ist der Bewegungsablauf automatisch in Abhängigkeit von einer durch einen Abstandssensor, insbesondere kontinuierlich und relativ zur Vorrichtung gemessenen Abstand zum Boden variierbar. Dieser Abstandssensor oder eine alternative 3D-Kamera ist insbesondere auf die zu bearbeitende Furche gerichtet, um den Bewegungsablauf auf das (Höhen-)Profil der Furche abzustimmen.

Sämtliche Abhängigkeiten des Bewegungsablaufs sind vorzugsweise vom Benutzer separat für jede Häufeleinheit zu- und abschaltbar. Darüber hinaus sind die Bewegungsabläufe der einzelnen Häufelelemente bevorzugt jeweils manuell veränderbar.

Weitere Einzelheiten und Vorteile der Erfindung sind in nachfolgend beschriebenen, schematisch dargestellten Ausführungsbeispielen zu entnehmen; es zeigen:
- Fig. 1: eine Übersichtsdarstellung einer Ausführungsform der erfindungsgemäßen Vorrichtung;
- Fig. 2: eine Draufsicht der Ausführungsform gemäß Fig. 1;
- Fig. 3: eine Übersichtsdarstellung einer Häufeleinheit der Ausführungsform gemäß Fig. 1;
- Fig. 4: einen symbolisch dargestellten Schaltplan betreffend die Ansteuerung der Stellmittel der Ausführungsform gemäß Fig. 1;
- Fig. 5: einen symbolisch dargestellten Querschnitt durch eine Dammkultur mit Querdämmen;
- Fig. 6: eine symbolisch dargestellte Draufsicht auf die Dammkultur mit Querdämmen gemäß Fig. 5.

Die nachfolgend erläuterten Merkmale des erfindungsgemäßen Ausführungsbeispiels können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

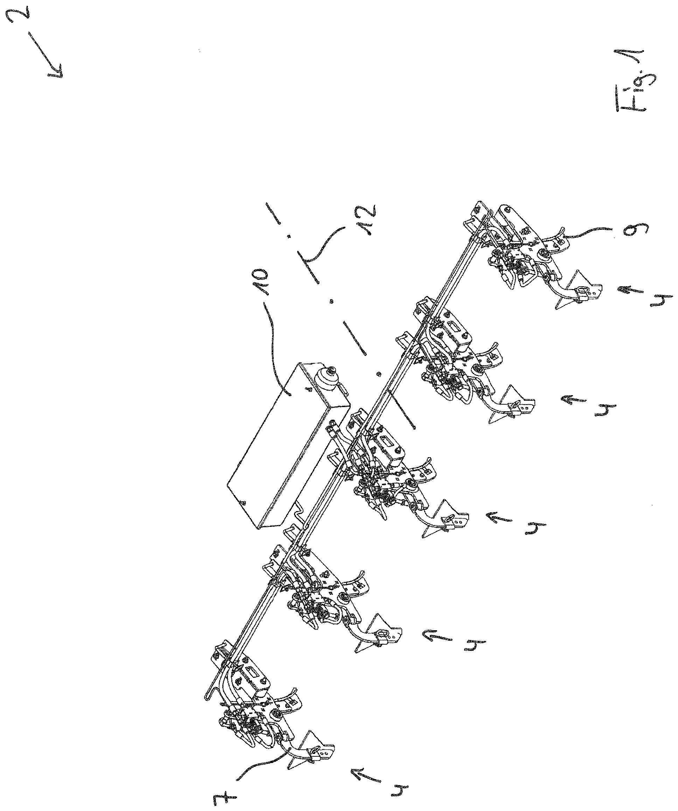

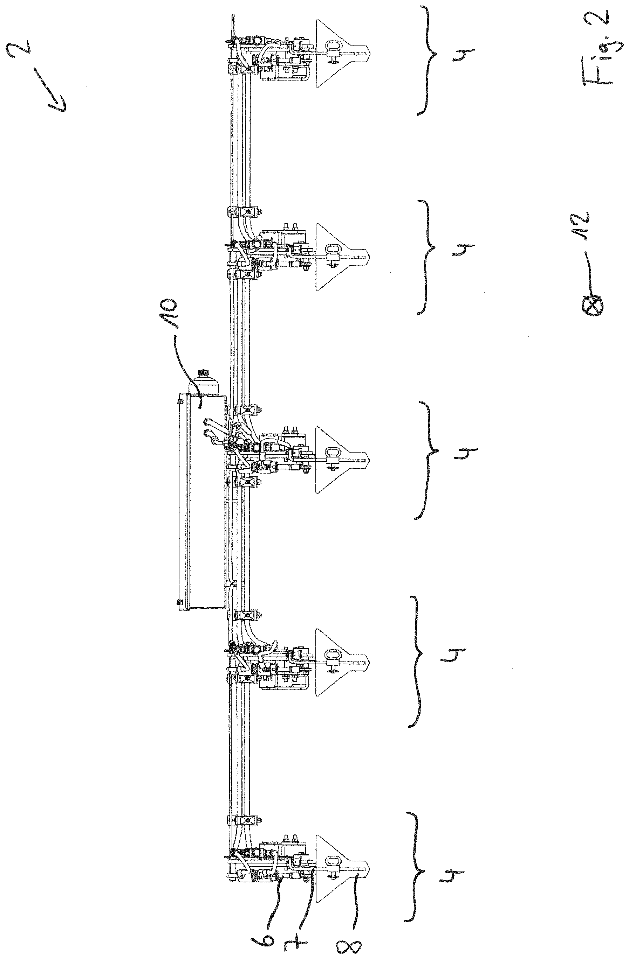

Fig. 1 und Fig. 2 zeigen eine erfindungsgemäße Vorrichtung 2 zur Herstellung von Querdämmen 40 in Dammkulturen, insbesondere in Kartoffelkulturen. Sie ist im Betrieb vorzugsweise an eine Zugmaschine oder an eine Kartoffellegemaschine gekoppelt, wodurch sie in Richtung der Längsachse 12 fortbewegt wird. Die Vorrichtung 2 hat dabei fünf Häufeleinheiten 4, jeweils umfassend ein als Hydraulikzylinder ausgebildetes Stellmittel 6 und zumindest im Betrieb der Vorrichtung 2 alternierend zwischen der dargestellten Häufelstellung zur Anhäufung von Erde und einer zweiten Stellung zur Positionierung der angehäuften Erde zwischen zwei Dämmen wechselndes Häufelelement 8. Die Häufel-elemente 8 sind jeweils als Schar ausgebildet und manuell höhenverstellbar an einer schwenkbar gelagerten Häufelschwinge 7 befestigt. Fig. 1 zeigt je Häufeleinheit 4 zusätzlich einen Lockerungszinken 9 zur Lockerung des Bodenbereichs zwischen den beiden im Betrieb daran angrenzenden Dämmen.

Die Vorrichtung 2 hat eine Steuereinheit 10, die zur voneinander unabhängigen Ansteuerung unterschiedlicher Häufeleinheiten 4 ausgebildet ist. Die fünf Häufeleinheiten 4 erhalten jeweils separate Signale von der Steuereinheit 10, wodurch sie einzeln zu- und abschaltbar sind und ihr Betrieb separat modifiziert werden kann.

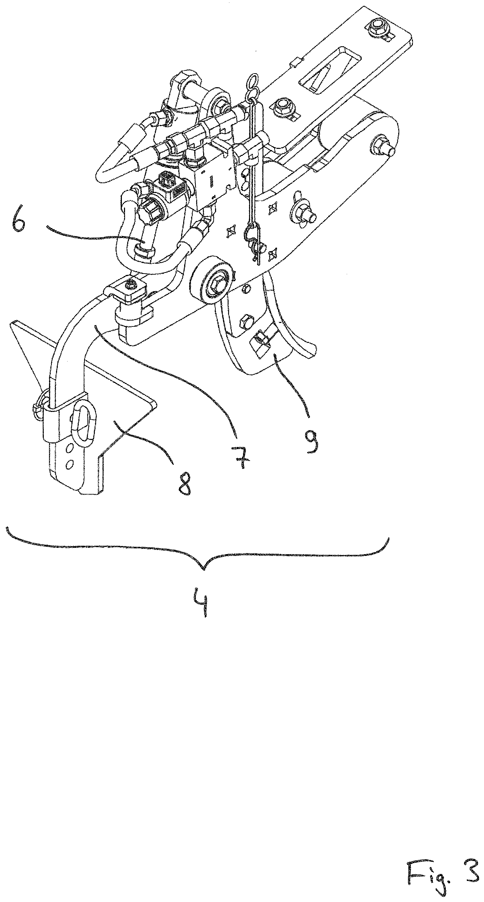

Die Steuereinheit 10 ist zur variablen Einstellung des Bewegungsablaufes des Häufelelementes 8 zumindest einer der Häufeleinheiten 4 im Betrieb der Vorrichtung 2 ausgebildet. Insbesondere ist die Steuereinheit 10 zur variablen Einstellung der Dauer des Verbleibens des Häufelelementes 8 in der Häufelstellung, in welcher sich das durch Fig. 3 gezeigte Häufelelement 8 befindet, und/oder der Eindringtiefe des Häufelelementes 8 in der Häufelstellung in den Boden ausgebildet.

Die Steuereinheit 10 ist zum Empfang von auf zumindest einem Neigungssensor, zumindest einem Fahrgeschwindigkeitssensor, zumindest einem Abstandssensor und/oder zumindest einem GPS-Empfänger oder dergleichen Ortungsgerät basierenden Informationen ausgebildet. Zumindest einer der Sensoren und/oder die Ortungseinrichtung sind der Steuereinheit 10 zugeordnet oder von der Steuereinheit 10 umfasst, in den Fig. Jedoch nicht dargestellt. Der Neigungssensor ist zur Messung einer Neigung einer Längsachse (vergl. Fig. 1 und Fig. 2) oder einer Querachse der Vorrichtung relativ zu einer Lotrechten ausgebildet. Der Abstandssensor ist zum Messen eines Abstandes zum Boden ausgebildet.

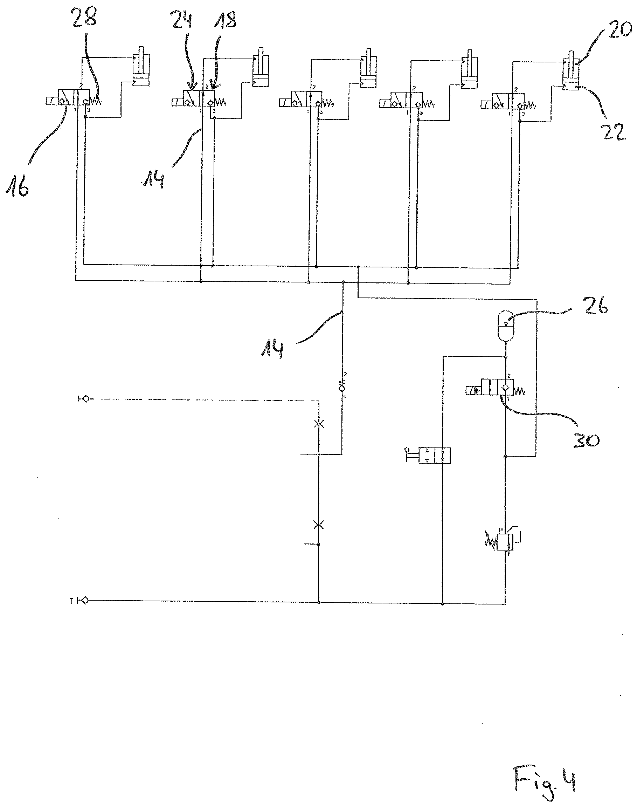

Die Stellmittel 6 der Häufeleinheiten 4 sind als Hydraulikzylinder ausgebildet (vergl. Fig. 2). Fig. 4 zeigt einen Schaltplan zur Verdeutlichung der Ansteuerung dieser Hydraulikzylinder, wobei jeder der fünf Hydraulikzylinder je einer anderen Hydraulikeinheit zugehört. Diese Hydraulikeinheiten sowie deren Ansteuerung ist dabei einheitlich aufgebaut. Die Steuereinheit 10 weist pro Hydraulikzylinder ein erstes elektrisch zu betätigendes Ventil 16 auf. Das Ventil 16 hat eine Zufuhrstellung 18, in der ein Kolbenringraum 20 des Hydraulikzylinders mit einer Fluidzufuhr verbunden ist. Das Ventil 16 ist in eine Kurzschlussstellung 24 überführbar, in der eine Verbindung zwischen einem Kolbenraum 22 des Hydraulikzylinders und dem Kolbenringraum 20 hergestellt ist.

Die Vorrichtung 2 weist ein Speicherelement 26 zur Zwischenspeicherung von Fluid auf. Dieses Speicherelement 26 ist mit den Kolbenräumen 22 der Hydraulikzylinder über ein weiteres Ventil 30 verbunden. Dem ersten Ventil 16 ist ein Rückstellelement 28 zur Verhinderung der Kurzschlussstellung 24 im Falle eines ausbleibenden Stromsignals zum Ventil 16 zugeordnet.

In Fig. 4 befinden sich die Ventile 16 jeweils in der Zufuhrstellung 18, wodurch Fluid aus der Fluidzufuhr in den Kolbenringraum 20 geleitet wird. Das aus dem Kolbenraum 22 verdrängte Fluid gelangt zum Teil in das Speicherelement 26 und wird zum anderen Teil von der Vorrichtung 2 abgeführt. Bei Umschaltung des ersten Ventils 16 in die Kurzschlussstellung 24 sind Kolbenraum 22 und Kolbenringraum 20 miteinander verbunden und mit dem durch das Speicherelement 26 erzeugten Fluiddruck beaufschlagt und werden durch das darin enthaltene Fluid gespeist. Das führt zu einem Ausfahren des Hydraulikzylinders.

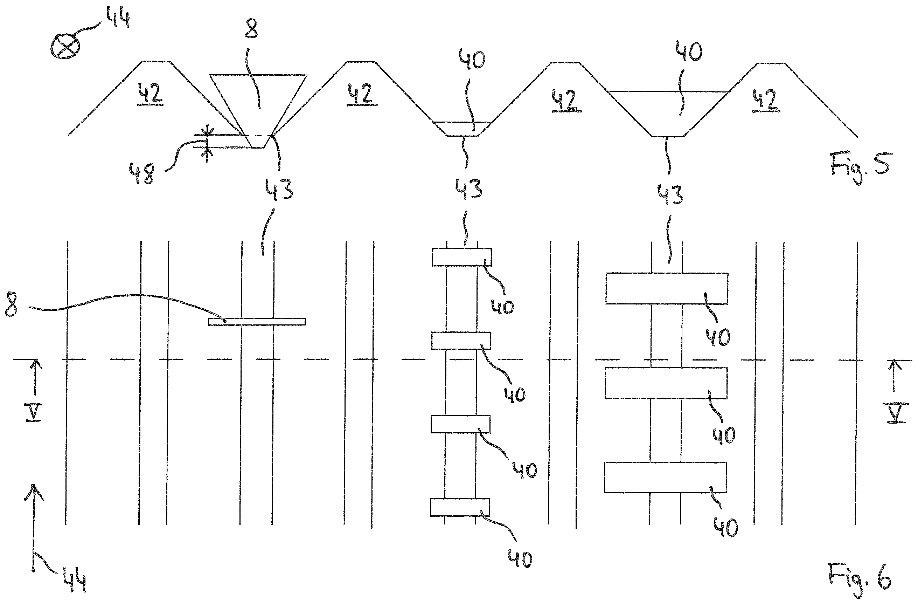

Fig. 5 und 6 zeigen eine Mehrzahl von Dämmen 42 der mit der Vorrichtung 2 bearbeiteten Dammkultur. Fig. 5 zeigt einen zu einer Längsrichtung 44 orthogonalen Querschnitt durch vier nebeneinander angeordnete Dämme 42 mit drei je von zwei Dämmen 42 begrenzten Furchen 43, der entlang der in Fig. 6 dargestellten Schnittlinie V verläuft. Schematisch dargestellt ist außerdem ein Häufelelement 8 in Häufelstellung, in der es in den die Furche 43 bildenden Erdboden eingedrungen ist. Dabei ist die die Häufelstellung gekennzeichnet durch eine Eindringtiefe 48 des Häufelelementes 8, die einzustellen ist und von der die Menge des vom Häufelelement 8 im Betrieb bewegten Erdbodens abhängt. In den weiteren dargestellten Furchen 43 sind Querdämme 40 mit unterschiedlichen Ausmaßen gezeigt. Während der Querdamm 40 in der mittleren Furche 43 eine relativ geringe Höhe hat, hat derjenige in der rechten Furche 43 eine größere Höhe. Die unterschiedlichen Höhen ergeben sich beispielsweise aufgrund von unterschiedlichen Eindringtiefen 48 des Häufelelements 8. Fig. 6 zeigt eine Draufsicht auf die vier Dämme 42 mit den Querdämmen 40. Insbesondere haben die Querdämme 40 unterschiedliche Ausmaße und Abstände in Längsrichtung 44.

## Patentansprüche

1. Vorrichtung (2) zur Herstellung von Querdämmen in Dammkulturen, insbesondere in Kartoffelkulturen, wobei die Vorrichtung (2) mindestens zwei Häufeleinheiten (4) jeweils umfassend ein als Hydraulikzylinder ausgebildetes Stellmittel (6) und zumindest ein im Betrieb der Vorrichtung (2) alternierend zwischen einer Häufelstellung zur Anhäufung von Erde und einer zweiten Stellung zur Positionierung der angehäuften Erde zwischen zwei Dämmen wechselndes Häufelelement (8) hat, **gekennzeichnet durch** eine Steuereinheit (10), die zur voneinander unabhängigen Ansteuerung unterschiedlicher Häufeleinheiten sowie zur Abschaltung einzelner Häufeleinheiten (4) ausgebildet ist und zumindest ein erstes vorzugsweise elektrisch zu betätigendes Ventil (16) aufweist, durch welches ein Fluidstrom zum bzw. vom Hydraulikzylinder steuerbar ist, wobei das erste Ventil von der Steuereinheit angesteuert oder geschaltet wird.

2. Vorrichtung nach Anspruch 1, **dadurch gekennzeichnet, dass** die Steuereinheit (10) zur variablen Einstellung des Bewegungsablaufes des Häufelelementes (8) zumindest einer der Häufeleinheiten (4) im Betrieb der Vorrichtung, insbesondere zur variablen Einstellung der Dauer des Verbleibens des Häufelelementes (8) in der Häufelstellung und/oder der Eindringtiefe des Häufelelementes (8) in der Häufelstellung in den Boden, ausgebildet ist.

3. Vorrichtung nach einem der vorhergehenden Ansprüche, **dadurch gekennzeichnet, dass** das erste Ventil (16) zumindest eine Zufuhrstellung (18) hat, in der ein Kolbenringraum (20) des Hydraulikzylinders mit einer Fluidzufuhr (14) verbunden ist.

4. Vorrichtung nach einem der vorhergehenden Ansprüche, **dadurch gekennzeichnet, dass** das erste Ventil (16) oder ein zweites Ventil in eine eine Verbindung zwischen einem Kolbenraum (22) des Hydraulikzylinders und dem Kolbenringraum (20) herstellende Kurzschlussstellung (24) überführbar ist.

5. Vorrichtung nach einem der vorhergehenden Ansprüche, **gekennzeichnet, durch** zumindest ein Speicherelement (26) zur Zwischenspeicherung von Fluid, welches zumindest mit der Kolbenraum (22), insbesondere über ein weiteres Ventil, verbunden ist.

6. Vorrichtung nach einem der vorhergehenden Ansprüche, **dadurch gekennzeichnet, dass** dem ersten Ventil (16) ein Rückstellelement (28) zur Verhinderung der Kurzschlussstellung (24) zugeordnet ist.

7. Kartoffellegemaschine mit zumindest einer Legeeinheit zur Positionierung von vereinzelten Kartoffeln in zu formenden Dämmen, **gekennzeichnet durch** eine Vorrichtung (2) nach einem der Ansprüche 1 bis 6.

8. Kartoffellegemaschine nach Anspruch 7, **dadurch gekennzeichnet, dass** der Steuereinheit zumindest ein Umlaufgeschwindigkeitsmesser zur Erfassung der Umlaufgeschwindigkeit zumindest eines Vereinzelungselementes von zumindest einer Legeeinheit zugeordnet ist.

9. Kartoffellegemaschine nach Anspruch 8, **dadurch gekennzeichnet, dass** die Zahl der Umlaufgeschwindigkeitsmesser der der Legeeinheiten entspricht.

10. Verfahren zur Herstellung von Querdämmen in Dammkulturen, insbesondere in Kartoffelkulturen, mit einer Vorrichtung, insbesondere einem Querdammhäufler, umfassend zumindest zwei Häufeleinheiten (4) mit jeweils zumindest einem Häufelelement (8) und zumindest einem Stellmittel (6), insbesondere mit einer Vorrichtung (2) nach einem der Ansprüche 1 bis 9, wobei die Häufelelemente (8) einen Bewegungsablauf haben, durch den die Häufelelemente (8) von einer Häufelstellung zur Anhäufung von Erde in eine zweite Stellung zur Positionierung der angehäuften Erde zwischen zwei Dämmen und zurück überführt werden, und die Vorrichtung währenddessen parallel zur Haupterstreckungsrichtung der Dämme fortbewegt wird, **dadurch gekennzeichnet, dass** die Bewegungsabläufe unterschiedlicher Häufelelemente (8) durch eine Steuereinheit (10) voneinander unabhängig gesteuert werden, wobei die Steuereinheit zur Abschaltung einzelner Häufeleinheiten ausgebildet ist und zumindest ein erstes vorzugsweise elektrisch zu betätigendes Ventil aufweist, durch welches ein Fluidstrom zum bzw. vom Hydraulikzylinder steuerbar ist, wobei das erste Ventil von der Steuereinheit angesteuert oder geschaltet wird.

11. Verfahren nach Anspruch 10, **dadurch gekennzeichnet, dass** der Bewegungsablauf zumindest eines Häufelelementes, insbesondere die Dauer des Verbleibens zumindest eines Häufelelementes (8) in der Häufelstellung und/oder die Eindringtiefe des Häufelelementes (8) in der Häufelstellung in den Boden, mittels der Steuereinheit (10) variierbar ist/sind.

12. Verfahren nach Anspruch 10 oder 11, **dadurch gekennzeichnet, dass** der Bewegungsablauf zumindest eines Häufelelementes (8) automatisch in Abhängigkeit von einer durch einen Neigungssensor ermittelten Neigung der Vorrichtung (2) relativ zu einer Lotrechten variierbar ist.

13. Verfahren nach Anspruch 12, **dadurch gekennzeichnet, dass** der Bewegungsablauf automatisch in Abhängigkeit von der Neigung einer Längsachse (12) der Vorrichtung (2) relativ zur Lotrechten variierbar ist, insbesondere mit wachsender Verschwenkung der Längsachse (12) relativ zu einer Horizontalen zumindest die Frequenz des Erreichens der zweiten Stellung oder die Eindringtiefe des Häufelelementes (8) in den Boden in Häufelstellung erhöht wird.

14. Verfahren nach einem der Ansprüche 10 bis 13, **dadurch gekennzeichnet, dass** der Bewegungsablauf zumindest eines Häufelelementes (8) automatisch in Abhängigkeit von einer, insbesondere durch einem Geschwindigkeitssensor der Vorrichtung (2) ermittelten, Fahrgeschwindigkeit variierbar ist.

15. Verfahren nach einem der Ansprüche 10 bis 14, **dadurch gekennzeichnet, dass** der Bewegungsablauf zumindest eines Häufelelementes (8) automatisch in Abhängigkeit von einer insbesondere durch zumindest einen GPS-Empfänger oder dergleichen Ortungsgerät ermittelten Richtungsänderung oder einem Lenkwinkel der Vorrichtung (2) oder einer daran gekoppelten Maschine variierbar ist.

16. Verfahren nach einem der Ansprüche 10 bis 15, **dadurch gekennzeichnet, dass** der Bewegungsablauf zumindest eines Häufelelementes (8) automatisch in Abhängigkeit von einem insbesondere durch zumindest einen GPS-Empfänger oder dergleichen Ortungsgerät ermittelten lokalen Aufenthaltsort der Vorrichtung (2) oder einer daran gekoppelten Maschine variierbar ist.

17. Verfahren nach einem der Ansprüche 10 bis 16, **dadurch gekennzeichnet, dass** zumindest eine Häufeleinheit (4) zur Vermeidung von Querdämmen in Fahrgassen automatisch zyklisch, insbesondere in Abhängigkeit von einer Anzahl an Richtungswechseln oder an Aushebungen der Vorrichtung (2) oder in Abhängigkeit des durch zumindest einen GPS-Empfänger oder dergleichen Ortungsgerät ermittelten lokalen Aufenthaltsorts, abschaltbar ist.

18. Verfahren nach einem der Ansprüche 10 bis 17, **dadurch gekennzeichnet, dass** im Betrieb in Abhängigkeit von der insbesondere auf Basis der Daten von zumindest einem GPS-Empfänger oder dergleichen Ortungsgerät ermittelten Fahrtrichtung je eines der beiden in einer Querrichtung äußersten Häufeleinheiten (4) automatisch abschaltbar ist.

19. Verfahren nach einem der Ansprüche 10 bis 18, **dadurch gekennzeichnet, dass** der Bewegungsablauf zumindest eines Häufelelementes automatisch in Abhängigkeit von einer durch einen Abstandssensor insbesondere kontinuierlich gemessenen Abstand zum Boden variierbar ist.

## Claims

1. A device (2) for forming transverse ridges in ridge planting, particularly for potato crops, wherein the device (2) has at least two ridging units (4), each comprising an actuating means (6) configured as a hydraulic cylinder and at least one ridging element (8) which, during operation of the device (2), alternates between a ridging position for accumulating soil and a second position for positioning the accumulated soil between two ridges, **characterized by** a control unit (10), which is configured for mutually independent control of different ridging units as well as for switching off individual ridging units (4), and which has at least a first valve (16), which is preferably operable electrically and by means of which a fluid flow to or from the hydraulic cylinder can be controlled, wherein the first valve is actuated or switched by the control unit.

2. The device according to claim 1, **characterized in that** the control unit (10) is configured for variable adjustment of the sequence of movement of the ridging element (8) of at least one of the ridging units (4) during operation of the device, particularly for variable adjustment of the length of time for which the ridging element (8) remains in the ridging position and/or the penetration depth into the ground of the ridging element (8) in the ridging position.

3. The device according to any one of the preceding claims, **characterized in that** the first valve (16) has at least one supply position (18) in which a piston ring space (20) of the hydraulic cylinder is connected to a fluid supply (14).

4. The device according to any one of the preceding claims, **characterized in that** the first valve (16) or a second valve can be transferred into a short-circuit position (24) establishing a connection between a piston space (22) of the hydraulic cylinder and the piston ring space (20).

5. The device according to any one of the preceding claims, **characterized by** at least one storage element (26) for intermediate storage of fluid, which element is connected at least to the piston space (22), particularly via another valve.

6. The device according to any one of the preceding claims, **characterized in that** a restoring element (28) is associated with the first valve (16) for preventing the short-circuit position (24).

7. A potato planter with at least one planting unit for positioning singled potatoes in ridges to be formed, **characterized by** a device (2) according to any one of claims 1 to 6.

8. The potato planter according to claim 7, **characterized in that** at least one rotation speed detector for detecting the rotation speed of at least one singling element of at least one planting unit is associated with the control unit.

9. The potato planter according to claim 8, **characterized in that** the number of rotation speed detectors corresponds to that of the planting units.

10. A method for forming transverse ridges in ridge planting, particularly for potato crops, using a device, particularly a transverse ridging device, comprising at least two ridging units (4), each with at least one ridging element (8) and at least one actuating means (6), in particular with a device (2) according to any one of claims 1 to 9, wherein the ridging elements (8) have a sequence of movement by which the ridging elements (8) are transferred from a ridging position for accumulating soil to a second position for positioning the accumulated soil between two ridges and back again, while the device is moved parallel to the main extension direction of the ridges, **characterized in that** the sequences of movement of different ridging elements (8) are controlled independently of one another by a control unit (10), wherein the control unit is configured to switch off individual ridging units and has at least a first valve, which is preferably operable electrically and by means of which a fluid flow to or from the hydraulic cylinder can be controlled, wherein the first valve is actuated or switched by the control unit.

11. The method according to claim 10, **characterized in that** the sequence of movement of at least one ridging element, particularly the length of time for which the at least one ridging element (8) remains in the ridging position and/or the depth of penetration into the ground of the ridging element (8) in the ridging position is/are variable by means of the control unit (10).

12. The method according to claim 10 or 11, **characterized in that** the sequence of movement of at least one ridging element (8) can be varied automatically as a function of an inclination of the device (2) relative to a perpendicular determined by an inclination sensor.

13. The method according to claim 12, **characterized in that** the sequence of movement is automatically variable as a function of the inclination of a longitudinal axis (12) of the device (2) relative to the perpendicular, at least the frequency of reaching the second position or the penetration depth into the ground of the ridging element (8) in the ridging position is increased, particularly as the inclination of the longitudinal axis (12) relative to a horizontal increases.

14. The method according to any one of claims 10 to 13, **characterized in that** the sequence of movement of at least one ridging element (8) can be varied automatically as a function of a travel speed of the device (2) determined by a speed sensor.

15. The method according to any one of claims 10 to 14, **characterized in that** the sequence of movement of at least one ridging element (8) can be varied automatically as a function of a change in direction or a steering angle of the device (2) or of a machine coupled thereto, which change in direction or steering angle is determined particularly by at least one GPS receiver or similar locating device.

16. The method according to any one of claims 10 to 15, **characterized in that** the sequence of movement of at least one ridging element (8) can be varied automatically as a function of a location of the device (2) or of a machine coupled thereto, which location is determined particularly by at least one GPS receiver or similar locating device.

17. The method according to any one of claims 10 to 16, **characterized in that** at least one ridging unit (4) can be switched off automatically in a cyclic manner, particularly as a function of a number of changes of direction or of lifts of the device (2) or as a function of the location determined by at least one GPS receiver or similar locating device, in order to avoid transverse ridges in driving lanes.

18. The method according to any one of claims 10 to 17, **characterized in that**, during operation, one of the two outermost ridging units (4) in a transverse direction can be switched off automatically as a function of the direction of travel determined particularly on the basis of the data from at least one GPS receiver or similar locating device.

19. The method according to any one of claims 10 to 18, **characterized in that** the sequence of movement of at least one ridging element can be varied automatically as a function of a ground clearance particularly continuously measured by a proximity sensor.

## Revendications

1. Dispositif (2) pour former des barrages transversaux dans les cultures de crête, en particulier dans les cultures de pommes de terre, dans lequel le dispositif (2) est doté d'au moins deux unités de buttage (4) comprenant chacune un moyen de réglage (6) conçu comme un vérin hydraulique et au moins un élément de buttage (8) alternant, pendant le fonctionnement du dispositif (2), entre une position de buttage pour l'accumulation de terre et une seconde position de positionnement de la terre accumulée entre deux barrages, **caractérisé par** une unité de commande (10) qui est conçue pour la commande indépendante de différentes unités de buttage et pour la désactivation d'unités de buttage individuelles (4) et comporte au moins une première soupape (16), qui doit de préférence être actionnée électriquement, au moyen de laquelle un écoulement de fluide vers ou depuis le vérin hydraulique peut être commandé, dans lequel la première soupape est commandée ou commutée par l'unité de commande.

2. Dispositif selon la revendication 1, **caractérisé en ce que** l'unité de commande (10) est conçue pour le réglage variable de la séquence de déplacement de l'élément de buttage (8) d'au moins l'une des unités de buttage (4) pendant le fonctionnement du dispositif, en particulier pour le réglage variable de la durée pendant laquelle l'élément de buttage (8) reste en position de buttage et/ou de la profondeur de pénétration de l'élément de buttage (8) en position de buttage dans le sol.

3. Dispositif selon l'une des revendications précédentes, **caractérisé en ce que** la première soupape (16) présente au moins une position d'alimentation (18) dans laquelle une chambre annulaire de piston (20) du vérin hydraulique est reliée à une alimentation en fluide (14).

4. Dispositif selon l'une des revendications précédentes, **caractérisé en ce que** la première soupape (16) ou une seconde soupape peut être amenée dans une position de court-circuit (24) établissant une liaison entre une chambre de piston (22) du vérin hydraulique et la chambre annulaire de piston (20).

5. Dispositif selon l'une des revendications précédentes, **caractérisé par** au moins un élément de stockage (26) pour le stockage intermédiaire de fluide, qui est relié au moins à la chambre de piston (22), en particulier par l'intermédiaire d'une autre soupape.

6. Dispositif selon l'une des revendications précédentes, **caractérisé en ce qu'**un élément de rappel (28) est associé à la première soupape (16) pour empêcher la position de court-circuit (24) .

7. Machine à planter les pommes de terre comportant au moins une unité de plantation pour positionner des pommes de terre séparées en barrages à former, **caractérisée par** un dispositif (2) selon l'une des revendications 1 à 6.

8. Machine à planter les pommes de terre selon la revendication 7, **caractérisée en ce qu'**au moins un détecteur de vitesse de rotation est associé à l'unité de commande pour détecter la vitesse de rotation d'au moins un élément de séparation d'au moins une unité de plantation.

9. Machine à planter les pommes de terre selon la revendication 8, **caractérisée en ce que** le nombre de détecteurs de vitesse de rotation correspond à celui des unités de plantation.

10. Procédé pour former des barrages transversaux dans les cultures de crête, en particulier dans les cultures de pommes de terre, comportant un dispositif, en particulier un buttoir transversal, comprenant au moins deux unités de buttage (4) dotées chacune d'au moins un élément de buttage (8) et d'au moins un moyen de réglage (6), en particulier comportant un dispositif (2) selon l'une des revendications 1 à 9, dans lequel les éléments de buttage (8) présentent une séquence de déplacement au moyen de laquelle les éléments de buttage (8) passent d'une position de buttage pour l'accumulation de terre à une seconde position de positionnement de la terre accumulée entre deux barrages et vice-versa, et le dispositif est pendant ce temps déplacé parallèlement à la direction principale d'extension des barrages, **caractérisé en ce que** les séquences de déplacement des différents éléments de buttage (8) sont commandées indépendamment les unes des autres par une unité de commande (10), l'unité de commande étant conçue pour désactiver une première soupape, qui doit de préférence être actionnée électriquement, au moyen de laquelle un écoulement de fluide vers ou depuis le vérin hydraulique peut être commandé, dans lequel la première soupape est commandée ou commutée par l'unité de commande.

11. Procédé selon la revendication 10, **caractérisé en ce que** la séquence de déplacement d'au moins un élément de buttage, en particulier la durée pendant laquelle au moins un élément de buttage (8) reste en position de buttage et/ou la profondeur de pénétration de l'élément de buttage (8) en position de buttage dans le sol, peut/peuvent être modifiée(s) au moyen de l'unité de commande (10).

12. Procédé selon la revendication 10 ou 11, **caractérisé en ce que** la séquence de déplacement d'au moins un élément de buttage (8) peut être modifiée automatiquement en fonction d'une inclinaison, déterminée par un capteur d'inclinaison, du dispositif (2) par rapport à une verticale.

13. Procédé selon la revendication 12, **caractérisé en ce que** la séquence de déplacement peut être modifiée automatiquement en fonction de l'inclinaison d'un axe longitudinal (12) du dispositif (2) par rapport à la verticale, en particulier au moins la fréquence à laquelle la seconde position est atteinte ou la profondeur de pénétration de l'élément de buttage (8) dans le sol en position de buttage augmente lorsque le pivotement de l'axe longitudinal (12) par rapport à une horizontale augmente.

14. Procédé selon l'une des revendications 10 à 13, **caractérisé en ce que** la séquence de déplacement d'au moins un élément de buttage (8) peut être modifiée automatiquement en fonction d'une vitesse de déplacement déterminée en particulier par un capteur de vitesse du dispositif (2).

15. Procédé selon l'une des revendications 10 à 14, **caractérisé en ce que** la séquence de déplacement d'au moins un élément de buttage (8) peut être modifiée automatiquement en fonction d'un changement de direction déterminé en particulier par au moins un récepteur GPS ou par un appareil de localisation similaire ou en fonction d'un angle de braquage du dispositif (2) ou d'une machine couplée à celui-ci.

16. Procédé selon l'une des revendications 10 à 15, **caractérisé en ce que** la séquence de déplacement d'au moins un élément de buttage (8) peut être modifiée automatiquement en fonction d'un emplacement local du dispositif (2) ou d'une machine couplée à celui-ci, lequel emplacement local est déterminé en particulier par au moins un récepteur GPS ou par un appareil de localisation similaire.

17. Procédé selon l'une des revendications 10 à 16, **caractérisé en ce qu'**au moins une unité de buttage (4) peut être désactivée automatiquement de manière cyclique pour éviter les barrages transversaux dans les voies de circulation, notamment en fonction d'un certain nombre de changements de direction ou d'excavations du dispositif (2) ou en fonction de l'emplacement local déterminé par au moins un récepteur GPS ou un appareil de localisation similaire.

18. Procédé selon l'une des revendications 10 à 17, **caractérisé en ce que**, pendant le fonctionnement, en fonction du sens de déplacement déterminé en particulier sur la base des données d'au moins un récepteur GPS ou d'un appareil de localisation similaire, l'une des deux unités de buttage les plus extérieures (4) dans le sens transversal peut être désactivée automatiquement.

19. Procédé selon l'une des revendications 10 à 18, **caractérisé en ce que** la séquence de déplacement d'au moins un élément de buttage peut être modifiée automatiquement en fonction d'une distance par rapport au sol, qui est mesurée en particulier en continu par un capteur de distance.
